## Europäisches Patentamt

## European Patent Office

## Office européen des brevets

(11) Veröffentlichungsnummer: **0 161 513**
**B1**

(12) **EUROPÄISCHE PATENTSCHRIFT**

(45) Veröffentlichungstag der Patentschrift:
12.07.89

(51) Int. Cl.⁴: **B 65 G 57/20**

(21) Anmeldenummer: **85104575.7**

(22) Anmeldetag: **16.04.85**

(54) **Vorrichtung zum Stapeln von Paletten mit auf diesen abgesetzten Gegenständen, vorzugsweise Grosssäcken.**

(30) Priorität: **14.05.84 DE 3417876**

(43) Veröffentlichungstag der Anmeldung:
**21.11.85 Patentblatt 85/47**

(45) Bekanntmachung des Hinweises auf die Patenterteilung:
**12.07.89 Patentblatt 89/28**

(84) Benannte Vertragsstaaten:
**AT FR GB SE**

(56) Entgegenhaltungen:
**CH-A-487 787**
**DE-A-2 010 165**
**DE-A-2 224 280**
**DE-B-2 334 651**
**DE-B-2 445 536**

(73) Patentinhaber: **Windmöller & Hölscher,**
**Münsterstrasse 48- 52, D-4540 Lengerich i.W. (DE)**

(72) Erfinder: **Wiggers, Winfried, Ing.- grad.,**
**Hermannstrasse 8, D-4440 Rheine (DE)**

(74) Vertreter: **Lorenz, Eduard, Rechtsanwälte Eduard**
**Lorenz - Bernhard Seidler Margrit Seidler -**
**Dipl.- Ing. Hans- K. Gossel Dr. Ina Philipps - Dr.**
**Paul B. Schäuble Dr. Siegfried Jackermeier,**
**Widenmayerstrasse 23 D-8000 München 22 (DE)**

**Beschreibung**

Die Erfindung betrifft eine Vorrichtung zum Stapeln von Gegenständen, insbesondere Paletten mit auf diesen abgesetzten Gegenständen mit im wesentlichen ebener Oberfläche, vorzugsweise Großsäcken, nach dem Oberbegriff des Patentanspruchs 1.

Bei einer aus der Veröffentlichung DE-B-2 334 651 bekannten Vorrichtung dieser Art sind horizontale Führungen in einem Schlitten vorgesehen, der in vertikalen Führungen eines Grundrahmens durch Antriebseinrichtungen heb- und absenkbar ist. In den horizontalen Führungen des Schlittens sind Lastaufnahmemittel geführt, die aus Zinken bestehen können.

Weiterhin sind Gabelstapler allgemein bekannt, bei denen die Gabelzinken an einem Gabelträger befestigt sind, der an einem in einem Hubgerüst geführten, heb- und absenkbaren Hubrahmen befestigt ist. Gabelstapler dienen beispielsweise der Aufnahme und dem Transport von auf Paletten abgesetzten Gegenständen. Um Gabelstapler wirtschaftlich einsetzen zu können, ist es wünschenswert, daß diese möglichst hohe Stapel transportieren, so lange deren Stabilität gewährleistet ist. Werden Gabelstapler dazu verwendet, aus nebeneinander stehenden, auf Paletten abgesetzten Gegenständen durch deren Absetzen aufeinander transportfähige höhere Stapel zu bilden, ist dies eine zeitaufwendige Arbeit, die insbesondere dann schwierig durchführbar ist, wenn derartige Gegenstände bei einem Produktions- oder Verarbeitungsprozeß in großer Anzahl anfallen, wie dies beispielsweise bei von einer Füll- und Verschließmaschine kommenden, auf Paletten abgesetzten gefüllten Großsäcken der Fall ist.

Aufgabe der Erfindung ist es, eine Vorrichtung nach dem Oberbegriff des Anspruchs 1 zu schaffen, bei dem ein Verrutschen des Stapels beim Herausziehen der Zinken vermieden wird.

Erfindungsgemäß wird diese Aufgabe durch die kennzeichnenden Merkmale des Patentanspruchs 1 gelöst. Bei der erfindungsgemäßen Vorrichtung stoppt der die Durchbiegung mindestens einer der Zinken ermittelnde Fühler die Absenkbewegung der Zinken, wenn deren Durchbiegung aufgehoben ist, so daß sichergestellt ist, daß die Zinken erst dann herausgezogen werden, wenn der gestapelte Gegenstand fest auf dem darunter liegenden aufsteht. Die erfindungsgemäße Vorrichtung ermöglicht somit eine einwandfreie Stapelung, weil die Zinken nach dem Absetzen des oberen Gegenstandes oder der oberen Palette auf dem unteren Gegenstand ohne nennenswerte Reibung, die zu einem Verrutschen des Stapels führen könnte, herausgezogen werden können. Der erfindungsgemäß vorgesehene Fühler erzeugt ein Signal oder blockiert die Rückzugseinrichtung für die Zinken so lange, bis deren Belastung unter einen Wert abgesunken ist, der noch eine nennenswerte Reibung der Zinken an den gestapelten Gegenständen oder der Palette zur Folge haben könnte.

Aus der Veröffentlichung DE-B-1 431 811 ist ein Regalstapelgerät mit Tragarmen bekannt, die mit auf diesen angeordneten Fühlvorrichtungen versehen sind, die bei aufgelegter Last die der Lastabgabe und bei leerem Lastträger die der Lastaufnahme zugeordnete Bewegungsfolge auslösen. Bei dem bekannten Regalstapelgerät dienen die Fühlvorrichtungen lediglich der Ermittlung, ob sich eine Last auf dem Lastträger befindet oder nicht. Hingegen vermögen die Fühlvorrichtungen bei dem bekannten Gerät nicht zu ermitteln, wie groß die auf den Tragarmen ruhende Last ist und ob sich diese unter der Last oder aus einem Stapel mit so geringer Reibung herausziehen lassen, daß eine Mitnahme der Last oder ein Verrutschen des Stapels ausgeschlossen ist.

Zweckmäßigerweise besteht der Fühler aus einem mit seinem einen Ende in dem Schlitten gelagerten Hebel, der sich über eine Rolle auf eine Zinke abstützt, wobei das andere Ende des Hebels bei seiner Auslenkung einen Schalter betätigt. Die Rolle kann unmittelbar an dem Hebel selbst gelagert sein.

Die Zinken können jeweils zwischen zwei im Abstand voneinander in dem Schlitten gelagerten Rollenpaaren geführt sein, wie es aus dem DE-GM-1 770 580 an sich bekannt ist. Dabei stützt sich die den Hebel auslenkende Rolle zwischen den Rollenpaaren auf der Oberseite einer Zinke ab, da diese Oberseite eine Durchbiegung nach oben erfährt, wenn die ausgefahrene und frei auskragenden Zinken belastet werden.

Ein Ausführungsbeispiel der Erfindung wird nachstehend anhand der Zeichnung näher erläutert. In dieser zeigt:

Fig. 1 eine Seitenansicht der Stapelvorrichtung und

Fig. 2 die Stapeleinrichtung nach Fig. 1 in Vorderansicht.

Zwei seitliche U-Profile 1, deren offenen Seiten einander zugewandt sind, stehen senkrecht auf zwei Doppel-T-Profilen 2, 3, die miteinander über zwei Quertraversen 4 und 5 verbunden sind. Die U-Profile selbst sind in ihrem oberen Bereich ebenfalls durch eine Quertraverse 6 miteinander verbunden. Die U-Profile 1 dienen zur Führung von Führungsrollen 7, die mit einem auf- und abfahrbaren Schlitten 8 verbunden sind. Dieser Schlitten 8 besteht aus zwei seitlichen Profilplatten 9 und 10, die miteinander über drei Traversen 11, 12 und 13 verbunden sind.

Mit den Profilplatten 10 sind obere und untere Führungsrollen 14, 14' verbunden, wobei die Führungsrolle 14' zusätzlich seitliche ringförmige Stege 15 aufweist. Von den Führungsrollen 14, 14' werden zwei Greiferarme 16 und 17 gehalten, die miteinander über zwei Querprofile 18 starr verbunden sind. Zwischen den Stegen 15 der Führungsrolle 14' ist der im Querschnitt rechteckige Greiferarm geführt, so daß dieser nicht seitlich verlaufen kann.

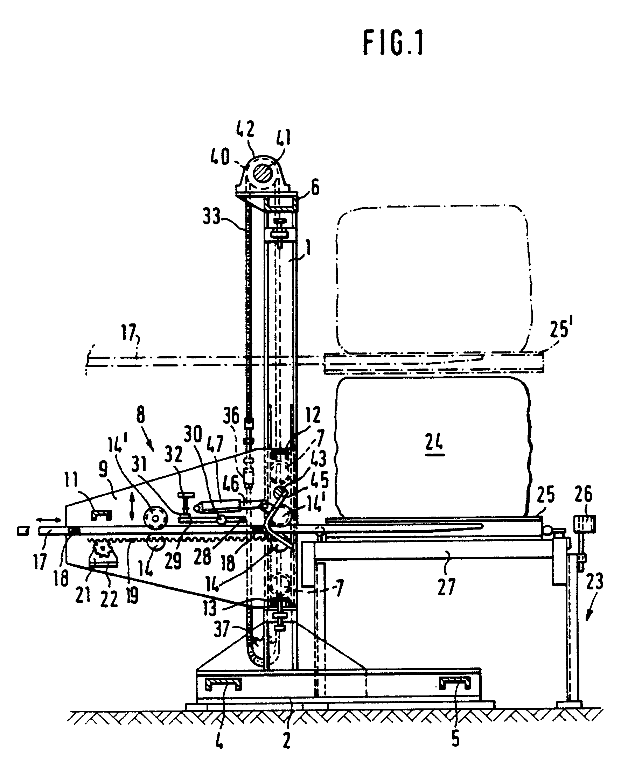

Mit dem Greiferarm 17 ist eine Zahnstange 19 verschweißt, die mit dem Zahnrad 20 eines Motors 21 kämmt, wobei letzterer über eine Konsole 22 mit der Profilplatte 9 fest verbunden ist. Durch Betätigung des Motors 21 können folglich die Greiferarme 16 und 17 entweder in die in Fig. 1 dargestellte Stellung verfahren oder aber in eine nicht dargestellte zurückgezogene Stellung verfahren werden.

Wie insbesondere aus der Fig. 1 hervorgeht, verläuft unmittelbar vor der Stapeleinrichtung eine Förderrollenbahn 23, über die einzelne gefüllte Großsäcke 24 auf Paletten 25 stehend der Stapeleinrichtung zugeführt werden. Die richtige Lage der einzelnen Paletten 25 zu den Greiferarmen 16 und 17 wird durch zwei Fotozellen 26 erreicht, die die Förderrollen 27 so lange antreiben, bis sich eine Palette 25 genau zwischen den beiden Fotozellen 26 befindet. Zu diesem Zweck können die Förderrollen 27 sogar rückwärts angetrieben werden, falls einzelne Paletten 25 aufgrund ihrer kinetischen Energie einmal die Fotozellen 26 überfahren sollten.

Nachdem nun eine mit einem Sack 24 beladene Palette 25 vor die Stapeleinrichtung gefahren worden ist (mit voll ausgezogenen Linien in Fig. 1 dargestellt), wird der Motor 21 betätigt, wodurch die Greiferarme 16 und 17 in die Palette 25 einfahren. Die Einfahrtiefe wird dabei über einen nicht dargestellten Endanschlag begrenzt.

Nachdem dies geschehen ist, wird der Schlitten 8 so weit angehoben, bis die Palette 25 die in Fig. 1 mit gestrichelten Linien dargestellte Lage erreicht hat. In dieser Lage verbleibt der Schlitten 8 so lange, bis eine neue Palette unter die zuvor angehobene eingefahren worden ist. Ist dies geschehen, senkt sich der Schlitten 8 so weit ab, bis die Greiferarme 16 und 17 entlastet sind und aus der zuvor angehobenen Palette durch Zurückziehen der Greiferarme 16 und 17 ausfahren können.

Um festzustellen, wann die Greiferarme 16 und 17 entlastet sind, ist mit der Profilplatte 9 ein Zapfen 28 fest verbunden, an dem ein Hebel 29 schwenkbar gelagert ist. Dieser Hebel 29 weist eine Rolle 30 auf, die sich auf dem Greiferarm 17 abstützt. Sobald nun der Greiferarm 17 belastet ist, biegt sich dieser durch und die Rolle 30 wird um den Punkt 28 nach oben gedrückt, wobei der Hebel 29 ebenfalls um den Punkt 28 nach oben geschwenkt wird. Am freien Ende des Hebels 29 ist ein Schaltnocken 31 vorgesehen, der auf einen Schalter 32 entsprechend einwirkt. Der Einfachheit halber ist diese Einrichtung zum Messen der Durchbiegung des Greiferarmes 17 lediglich in Fig. 1 dargestellt.

Die genaue Bestimmung der Lage, in der die Greiferarme 16 und 17 aus der angehobenen Palette ausfahren können, ist erforderlich, weil nämlich der Schlitten 8 von zwei Ketten 33 und 34 angehoben bzw. abgesenkt werden kann, die mit ihren beiden Enden fest mit dem Zapfen 35 bzw. 36 verbunden sind, die mit den Profilplatten 9 und 10 verschweißt sind. Die beiden Ketten 33 und 34 laufen über untere Kettenräder 37 und 38 und über obere Kettenräder 39 und 40, wobei die oberen Kettenräder 39 und 40 auf eine Welle 41 aufgesetzt sind, die von einem Motor 42 angetrieben werden kann.

Diese Art der Bewegung des Schlittens 8 sorgt für einen ruhigen Lauf, was bei einer nur einseitigen Aufhängung des Schlittens an einer Kette nicht der Fall wäre.

Die obere und untere Stellung des Schlittens 8 lassen sich exakt durch Endschalter bestimmen. Die Stellung aber, in der sich eine zuvor angehobene Palette auf einen daruntergefahrenen gefüllten Sack abgesetzt hat, kann nicht immer genau bestimmt werden, weil sich die Füllhöhe von Fall zu Fall ändern kann. Um nun aber diese Lage exakt bestimmen zu können, ist die zuvor beschriebene Einrichtung, welche die Durchbiegung des Greiferarms 17 bestimmt, vorgesehen, denn wenn sich eine angehobene Palette auf einen daruntergefahrenen Sack abgesetzt hat, ist auch die Durchbiegung gleich Null, was von der Einrichtung (28 - 32) angezeigt wird. Die Anzeige ist gleichzeitig ein Befehl zum Ausziehen der Greiferarme aus der angehobenen Palette und zum anschließenden Absenken des Schlittens 8 in seine untere Grundstellung.

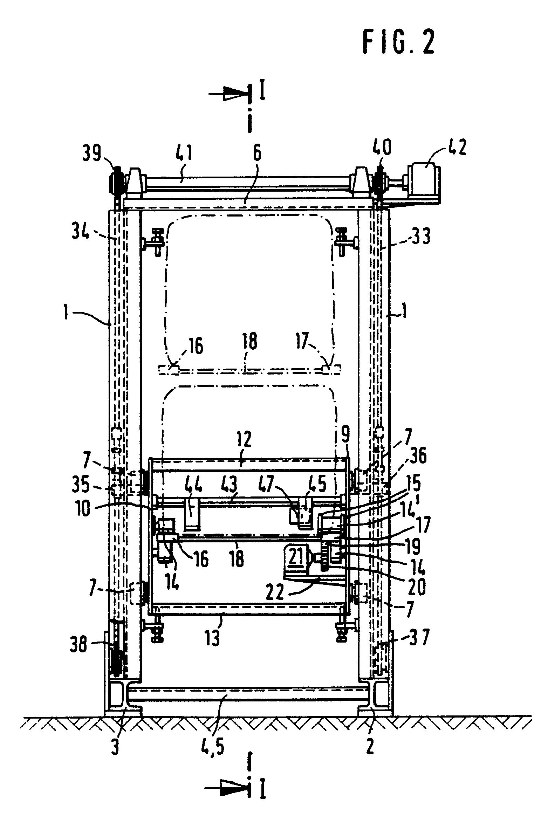

Wie aus den Figuren 1 und 2 zu ersehen ist, sind die beiden Profilplatten 9 und 10 miteinander noch durch eine drehbare Welle 43 verbunden, die zwei abgewinkelte Arme 44 und 45 trägt. An dem Arm 45 greift die Kolbenstange 46 einer Kolbenzylindereinheit 47 an, durch die die Arme 44 und 45 ausgeschwenkt werden können und sich gegen die den Armen zugewandte Seite einer hochgehobenen Palette 25' anlegen. Hierdurch wird mit Sicherheit vermieden, daß sich beim Ausziehen der Greiferarme 16 und 17 aus einer angehobenen Palette diese versetzt.

## Patentansprüche

1. Vorrichtung zum Stapeln von Gegenständen (24), insbesondere Paletten mit auf diesen abgesetzten Gegenständen mit im wesentlichen ebener Oberfläche, vorzugsweise Großsäcken, mit in Ausnehmungen der oder unter die Paletten oder Gegenstände greifenden, im Abstand voneinander angeordneten und zueinander parallelen, Greifarme bildenden Zinken (16, 17) die in mit einem Grundrahme (2, 3) verbundenen horizontalen Führungen (14, 14') ausfahrbar und einziehbar gelagert sind, wobei die horizontalen Führungen (14, 14') in einem Schlitten (8) vorgesehen sind, der in vertikale Ausführungen (1) des Grundrahmens durch Antriebseinrichtungen heb- und absenkbar ist und wobei unterhalb der Zinken eine Fördereinrichtung (23) für die zu stapelnden Gegenstände vorgesehen ist, dadurch gekennzeichnet, daß mindestens eine der Zinken (16, 17) mit einem deren unter Last erfolgende Durchbiegung ermittelnden Fühler (29 bis 32) versehen ist, der ein Signal erzeugt, das die Antriebseinrichtungen (39, 40, 41, 42) des Schlittens (8) solange stillsetzt, bis die Belastung der Zinken (16, 17) auf einen Wert abgesunken ist, der keine nennenswerte Reibung der Zinken an den gestapelten Gegenständen oder der Palette mehr zu Folge hat.

2. Vorrichtung nach Anspruch 1, dadurch gekennzeichnet, daß der Fühler aus einem mit seinem Ende in dem Schlitten (8) gelagerten Hebel (29) besteht, der sich über eine Rolle (30) auf eine Zinke (17) abstützt, und daß das andere Ende des Hebels (29) bei seiner Auslenkung einen Schalter (32) betätigt.

3. Vorrichtung nach Anspruch 1 oder 2, bei der die Zinken jeweils zwischen zwei im Abstand voneinander im Schlitten gelagerten Rollenpaaren geführt sind, dadurch gekennzeichnet, daß sich die Rolle (30) zwischen den Rollenpaaren (14, 14') auf der Oberfläche einer Zinke (17) abstützt.

## Claims

1. Apparatus for stacking objects (24), particularly pallets with articles having essentially flat surfaces, preferably large bags, which is equipped with prongs (16, 17) being arranged in parallel at a distance from each other and forming grip arms, which reach into recesses in or under the pallets or objects, and is supported in horizontal guide mechanisms (14, 14') connected with a base frame (2, 3) so as to be extendable and retractable, the guide mechanims (14, 14') being incorporated in a slide (8) which can be lifted and lowered in vertical channels (1) of the base frame by drive units, with a conveying device (23) for the objects to be stacked being provided beneath trie prongs, characterized in that at least one of the prongs (16, 17) is equipped with a sensor (29 to 32) monitoring their on-load deflection and producing a signal which stops the drive units (39, 40, 41, 42) of the slide (8) until the load on the prongs (16, 17) has dropped to a value which does not result in any noticeable friction of the prongs at the stacked objects or pallets.

2. Apparatus according to claim 1 characterized in that the sensor consists of a lever (29), whose end is embedded in the slide (8) and which rests on one prong (17) via a roller (30), and that the other end of the lever (29) actuates a switch (32) when deflected.

3. Apparatus according to claim 1 or 2, in which the prongs are guided between two pair of rollers arranged at a distance from each other in the slide, characterized in that the roller (30) rests on the surface of one prong (17) between the roller pairs (14, 14').

## Revendications

1. Dispositif pour l'empilage d'objets (24), notamment des palettes sur lesquelles sont déposés des objets ayant une surface substantiellement plane, de préférence des sacs larges, comportant des dents (16, 17) formant des grappins disposées de manière espacée et réciproquement parallèles s'engageant dans des échancrures des palettes ou des objets ou sous les palettes ou les objets, lesdites dents étant logées de manière à pouvoir être sorties de guidages horizontaux (14, 14') ou être rétractées dans ceux-ci, lesdits guidages horizontaux (14, 14') étant reliés à un bâti (2, 3), et étant prévus dans un chariot (8) qui est logé dans des guidages (1) verticaux du bâti et peut être relevé et abaissé au moyen d'un dispositif d'entraînement et un dispositif de transport (23) étant prévu au-dessous des dents pour l'empilage des objets, caractérisé en ce que, au moins une des dents (16, 17) est pourvue d'un capteur (29 à 32) détectant la flexion de la dent sous la charge, ledit capteur produisant un signal qui arrête le dispositif d'entraînement (39, 40, 41, 42) du chariot (8) jusqu'à ce que la charge sur les dents (16, 17) a baissé à une valeur qui n'a plus pour conséquence une friction significative des dents avec les objets empilés ou la palette.

2. Dispositif selon la revendication 1, caractérisé en ce que le capteur consiste en un levier (29) logé par son extrémité dans le chariot (8), et s'appuyant sur une dent (17) par l'intermédiaire d'une poulie (30) et que l'autre extrémité du levier (29) actionne un interrupteur (32) lors de la déviation du levier.

3. Dispositif selon les revendications 1 ou 2 dans le quel les dents sont guidées chacune entre deux paires de poulies logées de manière espacée l'une de l'autre dans le chariot, caractérisé en ce que la poulie (30) s'appuie entre les paires de poulies (14, 14') sur la surface d'une dent (17).

# FIG.1

# FIG. 2